# FASCICULE DE BREVET EUROPEEN

(11) **EP 0 519 834 B1**
(45) Date de publication et mention de la délivrance du brevet: **27.12.1995**
(21) Numéro de dépôt: 92401727.0
(22) Date de dépôt: 19.06.1992
(51) Int. Cl.: C03B 37/018

(54) **Procédé et dispositif pour la fabrication de préformes pour fibres optiques**
Verfahren und Vorrichtung zum Herstellen von Vorformen für optische Faser
Process and device for the manufacture of preforms for optical fibres

(30) Priorité: 21.06.1991 FR 9107669
(43) Date de publication de la demande: 23.12.1992
(73) Titulaire: FRANCE TELECOM, 75015 Paris (FR)
(72) Inventeur: Le Noane, Georges, F-22730 Tregastel (FR); Hardy, Isabelle, F-22700 Louannec (FR)
(74) Mandataire: Dubois-Chabert, Guy

(56) Documents cités:
- EP-A- 0 227 846
- DE-A- 3 440 900
- DE-A- 3 619 379
- FR-A- 2 589 461
- FR-A- 2 600 327
- GB-A- 2 019 383
- US-A- 4 257 797
- US-A- 4 302 230
- US-A- 4 576 622
- PHILIPS TELECOMMUNICATION REVIEW. vol. 46, no. 2, Juin 1988, HILVERSUM NL pages 1 - 12 G.KUYT ET AL. 'Production of optical fibres based on the PCVD process'
- PATENT ABSTRACTS OF JAPAN vol. 12, no. 387 (C-536)(3234) 14 Octobre 1988 & JP-A-63 134 529
- TOUTE L'ELECTRONIQUE. no. 504, Mai 1985, PARIS FR pages 64 - 67 J.-L.DE VAULCHIER 'Fibres optiques: le procédé'

## Description

La présente invention concerne un procédé et un dispositif de fabrication de préformes pour fibres optiques.

Elle s'applique tout particulièrement à la fabrication de fibres optiques monomodes mais peut aussi être appliquée à la fabrication de fibres optiques multimodes.

Les procédés déjà connus pour la fabrication de préformes pour fibres optiques se divisent en deux catégories :
- les procédés dits "externes", qui utilisent les techniques d'hydrolyse à la flamme, et
- les procédés dits "internes", qui utilisent une réaction d'oxydation en phase vapeur.

Ces procédés internes connus utilisent un dépôt interne en phase vapeur à l'intérieur d'un tube de silice à paroi mince (par exemple un tube de dimensions 19x25, c'est-à-dire un tube dont le diamètre intérieur vaut 19 mm et le diamètre extérieur 25 mm) et présentent au moins l'un des deux inconvénients suivants :
- les fibres optiques réalisées à partir des préformes obtenues par ces procédés sont relativement coûteuses,
- ces fibres optiques n'ont pas de caractéristiques géométriques de très grande précision, ce qui nuit notamment au développement de procédés de raccordement de fibres optiques qui soient simples et peu coûteux à mettre en oeuvre.

On connaît en particulier un procédé qui est très utilisé pour la fabrication de préformes pour fibres optiques.

Ce procédé, qui est appelé "dépôt chimique en phase vapeur modifié", ou MCVD (pour "Modified Chemical Vapour Deposition"), consiste à recouvrir la face interne d'un tube de silice à paroi mince (classiquement un tube de dimensions 19x25) d'un revêtement vitreux approprié par une réaction d'oxydation en phase vapeur.

Le tube ainsi que le revêtement vitreux formé à l'intérieur de ce tube sont peu épais à cause du moyen de chauffage utilisé pour atteindre une température suffisante et localisée pour la réaction d'oxydation.

Ce moyen de chauffage est un chalumeau qui présente, en fait, deux inconvénients.

Un premier inconvénient est la difficulté de chauffer l'intérieur du tube, à travers le diélectrique de ce tube, par le moyen de chauffage considéré, alors que, pour déposer une couche vitreuse de bonne qualité, il faut atteindre une température suffisante à l'intérieur du tube sans, dans le même temps, induire un rétreint du tube qui serait préjudiciable au bon déroulement du dépôt à ce stade du procédé MCVD.

Un deuxième inconvénient réside dans le fait que la silice extérieure du tube s'évapore au contact de la flamme du chalumeau lors de la mise en oeuvre du procédé MCVD.

Afin de remédier un peu à ces inconvénients et d'augmenter la capacité d'une préforme obtenue par ce procédé MCVD, on utilise généralement une contre-pression interne qui empêche un affaissement prématuré du tube et permet ainsi
- d'utiliser des tubes dont le diamètre interne est un peu plus grand que ce qui est indiqué plus haut et vaut par exemple 26 mm, d'où une section de tube plus importante pour une même épaisseur de diélectrique
- et/ou de déposer une couche vitreuse interne dont l'épaisseur est un peu plus importante que les épaisseurs admissibles avec le procédé MCVD "ordinaire" mentionné plus haut.

Malgré ces améliorations, le procédé MCVD ne peut être mis en oeuvre qu'avec des tubes à paroi mince.

Une autre technique connue pour augmenter la capacité de la préforme fabriquée et donc abaisser le coût de production de fibres optiques à partir de cette préforme, consiste
- à traiter un premier tube par le procédé MCVD, à procéder ensuite à l'opération de rétreint de ce premier tube puis à enfiler sur ce premier tube un deuxième tube en silice,
- ou encore à traiter le premier tube par le procédé MCVD, à enfiler ensuite un deuxième tube en silice sur ce premier tube puis à procéder au rétreint simultané des deux tubes.

Cette autre technique connue demeure cependant une technique qui est délicate à mettre en oeuvre et qui est assez limitée par l'épaisseur du dépôt dans le premier tube.

On connaît aussi une autre technique qui consiste, après rétreint du tube contenant le dépôt interne, à "recharger" le barreau ainsi obtenu, par exemple à l'aide d'une torche à plasma qui est capable de produire, par fusion directe, de la silice vitrifiée, par projection de grains de silice naturelle, ou qui est capable de réaliser un dépôt de couches de silice synthétique pure ou dopée par du fluor.

Outre le fait que de telles opérations ne vont pas toujours dans le sens de l'amélioration du rendement, car il s'agit d'opérations de reprise, elles sont généralement assez lourdes à mettre en oeuvre et présentent encore l'inconvénient de partir d'un tube à paroi mince, tube qui est généralement produit par des systèmes d'extrusion ou d'étirage de lingots, dont la précision géométrique est assez faible.

Les mêmes limitations apparaissent lorsque d'autres moyens de chauffage à travers le tube à paroi mince sont utilisés.

C'est notamment le cas du procédé qui est appelé PCVD (pour "Plasma Chemical Vapour Deposition") et qui utilise un plasma engendré par une cavité à micro-ondes, la seul différence étant la capacité (permise par le fait que le dépôt a lieu à plus basse température que dans le procédé MCVD) de réaliser des couches vitreuses très minces et de doper plus facilement ces couches avec du fluor, la combinaison de ces deux effets ouvrant plus de possibilités pour réaliser des profils d'indice optique précis et variés.

On connaît aussi, par le document FR-A-2 600 327, un autre procédé de fabrication d'une préforme pour fibres optiques.

Cet autre procédé connu présente l'avantage de partir de barreaux percés dont l'épaisseur et la précision sont grandes.

Il présente cependant l'inconvénient de réaliser le dépôt interne au moyen d'une colonne de plasma entretenue par une onde de surface qui est injectée à l'aide d'un coupleur hyperfréquence relié à un générateur de micro-ondes.

En effet, si l'injection de cette onde de surface et l'obtention de la colonne de plasma, dont la longueur peut être modulée en modulant la puissance électrique du générateur de micro-ondes utilisé, sont intéressantes parce qu'elles sont relativement indépendantes de l'épaisseur du diélectrique du barreau percé, il reste très difficile d'obtenir
- une régularité longitudinale correcte pour le dépôt de couches minces analogues à celles qui sont obtenues par le procédé PCVD, et
- une bonne régularité longitudinale de l'indice optique souhaité pour ces couches.

De plus, la longueur du dépôt est limitée par la longueur de la colonne de plasma qui est elle-même liée à la puissance du générateur.

Ainsi cet autre procédé connu présente des inconvénients, à savoir
- l'obtention d'un dépôt dont la régularité géométrique est assez mauvaise et d'un profil d'indice optique dont la régularité est également assez mauvaise, ce qui s'oppose malheureusement à l'avantage de partir de barreaux percés de grande précision, et
- l'obtention de préformes dont la capacité est assez fortement limitée, ce qui affecte l'intérêt économique du procédé.

La présente invention a pour but de remédier à ces inconvénients.

Elle a pour objet un procédé et un dispositif de fabrication de préformes pour fibres optiques qui conduisent à un coût de fabrication très faible et à une très grande précision géométrique pour les fibres issues de ces préformes.

De façon précise, la présente invention a tout d'abord pour objet un procédé de fabrication d'une préforme pour fibres optiques, conformément à la revendication 1.

Par "barreau creux à paroi épaisse", on entend un tube dont l'épaisseur est très grande et vaut au moins 15 mm, c'est-à-dire beaucoup plus que l'épaisseur des tubes à paroi mince que l'on utilise pour la mise en oeuvre du procédé MCVD.

Par "barreau creux de grande précision géométrique", on entend un barreau creux qui possède, après usinage :
- un diamètre intérieur nominal connu et précis avec une tolérance inférieure à 0,01 mm,
- un diamètre extérieur nominal connu et précis avec une tolérance inférieure à 0,01 mm, et
- une excellente concentricité, c'est-à-dire de l'ordre de 0,01 ou moins, entre la paroi interne et la paroi externe du barreau creux.

Ce barreau creux est par exemple fabriqué par usinage (perçage et rodage) à partir de lingots de silice ou à partir de tubes de silice de très forte épaisseur, qui sont obtenus par étirage ou extrusion, l'excellente concentricité mentionnée plus haut étant alors inhérente aux procédés d'usinage employés.

Le revêtement vitreux, qui est destiné à la formation ultérieure du coeur des fibres optiques, est un ensemble de couches de silice pure ou de silice dopée, suivant la nature du barreau creux (qui peut être lui même en silice pure ou en silice dopée).

Le procédé objet de l'invention peut comprendre en outre une attaque chimique de la surface interne du barreau après ou pendant le glaçage thermique, avant le dépôt interne.

Cette attaque chimique permet de parfaire le nettoyage du barreau creux et d'améliorer l'accrochage du revêtement vitreux qui, grâce à une telle attaque chimique, ne présente quasiment aucune bulle d'interface.

De préférence, le barreau creux est refroidi en aval de la circulation du mélange des composés gazeux permettant d'obtenir le revêtement vitreux.

Ceci permet d'augmenter l'efficacité de l'opération de dépôt des couches de revêtement vitreux interne.

En effet, le refroidissement en question augmente l'effet de thermo-phorèse, ce qui revient à augmenter le rendement global de dépôt.

De préférence, la fabrication du barreau est complétée par l'usinage d'un cône à une extrémité de ce barreau et suivant l'axe de celui-ci et le mélange de composés gazeux pénètre dans ce barreau par l'autre extrémité de celui-ci.

Ceci permet, entre autres, de faciliter l'écoulement du flux gazeux (résultant du mélange de composé gazeux) en aval du dépôt interne.

Selon un mode de mise en oeuvre préféré du procédé objet de l'invention, on raccorde en outre au barreau, coaxialement à celui-ci et du côté du cône usiné, un tube de silice à paroi mince dont le diamètre intérieur est égal au diamètre de la grande base du cône.

Ceci permet, entre autres, de faciliter le dépôt et l'évacuation de suies résiduelles qui résultent de ce dépôt.

De préférence, la fabrication du barreau est complétée par le raccordement, coaxialement à ce barreau et à une extrémité de celui-ci, d'une extrémité d'un barreau creux auxiliaire de silice à paroi épaisse, qui a sensiblement le même diamètre intérieur que le barreau fabriqué, et le mélange de composés gazeux pénètre dans ce barreau auxiliaire par l'autre extrémité de celui-ci.

Ceci permet, entre autres, de recevoir, dans ce barreau creux auxiliaire, le début du dépôt qui n'est généralement pas homogène.

La présente invention concerne également un dispositif de fabrication d'une préforme pour fibres optiques, conformément à la revendication 9.

Comme on l'a indiqué, dans la présente invention, les déplacements utilisés sont des déplacements relatifs : le barreau creux peut être déplacé par rapport au four ou, au contraire, le four peut être déplacé par rapport au barreau.

De plus, pour accomplir les opérations mentionnées plus haut (glaçage thermique, éventuelle attaque chimique, dépôt interne et rétreint), on peut maintenir constante la vitesse relative du barreau par rapport au four et faire varier la température de ce four pour obtenir les différentes températures du barreau (en particulier à la surface interne de ce barreau) qui sont nécessaires à la réalisation de ces opérations, ou, au contraire, maintenir constante la température du four et faire varier la vitesse relative du barreau par rapport au four pour obtenir ces différentes températures.

Il est même possible de maintenir constante la vitesse relative du barreau par rapport au four et de faire varier la température de ce four pour obtenir les différentes températures du barreau qui sont nécessaire à la réalisation de certaines des opérations et, pour les autres opérations, de maintenir la température du four fixe et d'adapter la vitesse relative du barreau par rapport au four de manière à obtenir les différentes températures du barreau qui sont nécessaires à la réalisation de ces autres opérations.

Le dispositif objet de l'invention permet donc de réaliser diverses opérations nécessaires à l'obtention de la préforme sans démonter le barreau.

Le glaçage thermique permet de parfaire les surfaces internes et externe du barreau après usinage et nettoyage de ce dernier.

Dans l'invention, le dépôt des couches du revêtement vitreux a lieu grâce à une réaction d'oxydation qui est analogue à la réaction d'oxydation ayant lieu lors de la mise en oeuvre du procédé MCVD mentionné plus haut.

De plus, dans la présente invention, le rétreint du barreau creux, muni de son dépôt interne, est réalisé avec une efficacité bien supérieure à celle d'un rétreint classique, obtenu avec un chalumeau pour des tubes de faibles épaisseurs.

Dans la présente invention, ce rétreint est permis grâce à l'apport thermique du four qui est capable de porter l'ensemble du barreau à une température suffisamment élevée et homogène.

La grande efficacité de cette opération de rétreint est permise grâce à la conjonction :
- de l'utilisation du four en tant que moyen de chauffage,
- de l'excellente concentricité des parois interne et externe du barreau usiné, et
- de la grande régularité du dépôt interne, cette grande régularité étant permise par l'homogénéité et la stabilité de la température de dépôt et par l'excellente régularité géométrique du diamètre intérieur du barreau.

Contrairement aux techniques connues, la présente invention permet de réaliser un dépôt de revêtement vitreux sur la paroi interne d'un barreau creux usiné de très forte épaisseur et de réaliser, sans démontage de ce barreau, un rétreint très efficace aboutissant à une préforme qui est très homogène et très précise et dont le diamètre de coeur et le diamètre extérieur sont parfaitement concentriques.

On aboutit ainsi :
- à une vitesse de production en km/heure de fibres équivalentes qui est nettement supérieure à celles que l'on obtient avec les procédés classiques de dépôt interne sur un tube à paroi mince, et
- à un rendement de fabrication très élevé grâce à la conjonction (a) d'une atténuation très faible correspondant à un dépôt CVD et bien maîtrisée, (b) d'une résistance mécanique importante et très homogène, à partir d'un barreau que l'on peut réaliser de manière très soignée avant fibrage, et (c) d'une grande précision sur les paramètres opto-géométriques.

En conséquence, on aboutit à des fibres optiques performantes,
- dont le très faible coût de production est encore accentué par un investissement relativement faible en ce qui concerne le dispositif de fabrication objet de l'invention, qui est très performant, et
- dont les caractéristiques opto-géométriques sont très précises, ce qui favorise le développement de technique de raccordement très simples.

Le four utilisé dans la présente invention peut être un four à induction.

Ce four à induction peut conprendre un suscepteur en graphite ou encore en zircone.

De préférence, les moyens de refroidissement sont fixés contre le four.

De préférence, les canaux d'amenée du gaz de refroidissement sont inclinés vers l' aval de la circulation du mélange de composés gazeux.

La présente invention sera mieux comprise à la lecture de la description d'exemples de réalisation donnés ci-après à titre purement indicatif et nullement limitatif, en référence aux dessins annexés sur lesquels :
- la figure 1 est une vue schématique d'un ensemble soudé comprenant un barreau creux en silice, usiné, à paroi épaisse et de grande précision, à l'intérieur duquel on veut déposer un revêtement vitreux conformément à l'invention, un barreau creux auxiliaire en silice ordinaire, qui a le même diamètre intérieur et le même diamètre extérieur que le précédent, et un tube à paroi mince en silice ordinaire,
- la figure 2 est une vue schématique d'un mode de réalisation particulier du dispositif objet de l'invention, et
- la figure 3 est une vue schématique d'un ensemble four-refroidisseur que comporte le dispositif schématiquement représenté sur la figure 2.

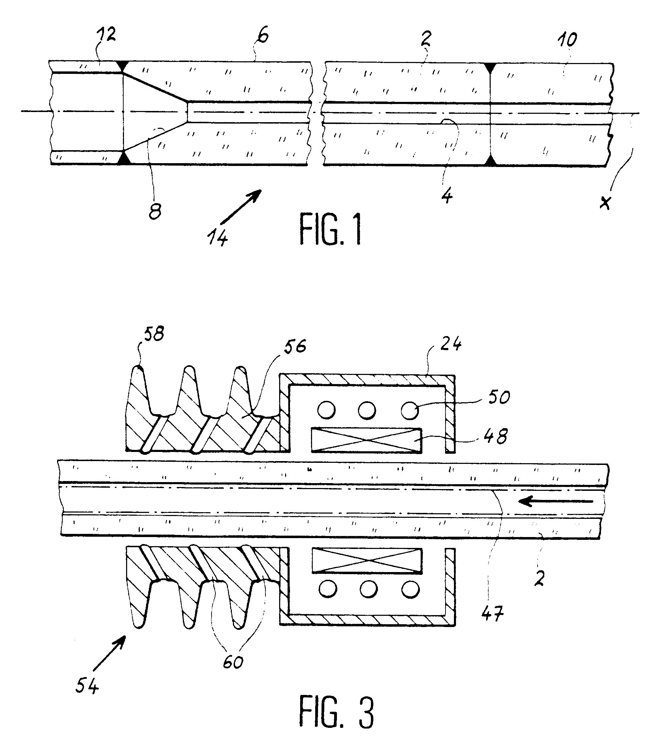

Sur la figure 1, on a représenté schématiquement un barreau creux de silice 2, usiné, à paroi épaisse, qui est adapté au procédé de fabrication d'une préforme pour fibres optiques objet de la présente invention.

Ce barreau creux 2, fait de silice naturelle ou de silice synthétique, est obtenu par usinage (perçage et rodage) de telle façon que son diamètre nominal intérieur soit connu et obtenu avec une tolérance inférieure à 0,01 mm et que son diamètre nominal extérieur soit connu et obtenu avec une tolérance inférieure à 0,01 mm et aussi que la concentricité de la paroi interne 4 et de la paroi externe 6 du barreau 2 soit quasiment parfaite (c'est-à-dire de l'ordre de 0,01 ou moins) comme le permettent les machines d'usinage actuelles, avec notamment un usinage du diamètre extérieur à partir d'un centrage très précis sur la diamètre intérieur, effectué par la machine.

Le barreau creux 2 peut être fait de silice pure ou de silice dopée, par exemple dopée avec du fluor, ou peut être fait, pour des raisons précises de structures finales de fibres optiques, d'une combinaison de silice pure et de silice dopée.

Ce barreau creux 2 est usiné
- soit directement, à partir d'un lingot de cette silice, qui résulte par exemple de la mise en oeuvre d'un procédé économique tel que la pousse axiale par torche à plasma,
- soit à partir d'un barreau creux qui est extrudé ou étiré ou qui résulte de la mise en oeuvre d'un procédé tel qu'une pousse latérale par torche à plasma sur un tube-substrat, et qui a de ce fait des dimensions (diamètre intérieur et diamètre extérieur) assez peu précises, par exemple des tolérances de l'ordre de ±2 mm sur ces diamètres intérieur et extérieur.

Cependant, dans tous les cas, le barreau 2 est constitué d'une silice d'assez bonne qualité dont la résistance mécanique est élevée mais qui est très économique.

L'opération d'usinage a donc pour but de réaliser un barreau creux très précis, notion qui est absente des techniques classiques de fabrication de préformes pour fibres optiques, techniques qui utilisent pour ce faire des tubes à paroi mince.

Un tube à paroi mince a par exemple un diamètre nominal intérieur de 19 mm et un diamètre nominal extérieur de 25 mm.

La précision généralement acceptée, pour des tubes différents, sur la section de ces tubes, vaut 4%.

En considérant toujours plusieurs tubes, ceci signifie que la variation sur les diamètres nominaux peut atteindre quelques dixièmes de mm avec aussi des répercussion sur la concentricité entre la paroi interne et la paroi externe de ces tubes.

Pour un tube donné, la précision est bien entendu meilleure mais, en général, reste à un niveau de tolérance égal à 0,5 mm sur les diamètres interne et externe et à un 1% sur la section.

Le concept de barreaux creux usinés est complètement différent de ce concept de tubes à paroi mince.

A titre d'exemple, les barreaux creux usinés que l'on utilise dans la présente invention peuvent avoir, un diamètre extérieur égal à 70 mm et un diamètre interieur choisi dans la domaine allant de 25 à 30 mm.

On voit ainsi que l'épaisseur de la paroi en silice passe de 2 ou 3 mm, pour un tube à paroi mince utilisable dans la procédé MCVD, a par exemple 20 mm pour un barreau creux usiné utilisable dans la présente invention.

En coupe transversale, la surface de la silice passe ainsi de 217 mm² pour un tube de dimensions 19x25 utilisable dans le procédé MCVD par exemple, à 3140 mm² pour un barreau creux usiné de dimensions 30x70 utilisable dans la présente invention, dont la section transversale a ainsi une surface qui est environ 14 fois plus grande.

La notion de barreaux creux usinés à paroi épaisse se caractérise alors par une tolérance d'usinage facile à obtenir par les machines d'usinage actuelles et inférieure à 0,01 mm.

Etant donné que le diamètre nominal est fixé par la côte d'usinage on obtient, y compris sur plusieurs barreaux, une précision sur la section transversale qui est de l'ordre de 0,5x10⁻³ au lieu de 4x10⁻² (mentionné plus haut) pour les tubes à paroi mince, soit une progression de presque deux ordres de grandeur pour la précision.

On verra par la suite que les conséquences de cette notion de barreaux creux usinés de forte épaisseur, associée au moyen de chauffage utilisé dans l'invention (un four) sont multiples.

L'opération d'usinage du barreau creux est possible du fait de la forte épaisseur de la paroi de ce barreau alors que l'usinage d'un tube à paroi mince est très délicate voire impossible.

De plus, l'augmentation de section transversale quand on passe d'un tube à paroi mince au barreau creux à paroi épaisse implique une augmentation dans la même proportion, de la capacité de préforme, pour un tube de même longueur que le barreau.

Ainsi, le coût de l'usinage de tubes à paroi mince, en admettant que cette usinage soit possible, serait prohibitif alors qu'il est parfaitement acceptable voire négligeable, pour le barreau creux à paroi épaisse, qui peut permettre d'obtenir une préforme dont la capacité vaut 250km/mètre de barreau.

Pour la mise en oeuvre du procédé objet de l'invention, on utilise par exemple des barreaux creux dont la longueur appartient au domaine allant de 1,2 m à 1,5 m, et les préformes obtenues à partir de ces barreaux peuvent permettre de produire 350 km de fibres optiques, après dépôt interne d'une quantité de silice très pure (et dopée ou non) qui, dans l'intention de produire des fibres optiques monomodes de très faible coût, est réduite à la valeur strictement minimale pour atteindre de très faibles atténuations optiques.

Pour la mise en oeuvre du procédé objet de l'invention, on produit donc des barreaux usinés à paroi épaisse au moindre coût avec une qualité de silice qui est insuffisante pour constituer directement le coeur des fibres optiques mais qui est suffisante pour que l'on puisse réduire la partie qui est déposée à l'intérieur du barreau à un strict minimum, compatible avec la qualité recherchée pour les fibres optiques.

En revenant à la figure 1, on peut compléter l'usinage du barreau creux à paroi épaisse 2 en réalisant un cône 8 ou "cône de sortie", à l'extrémité du barreau 2 qui est opposée à celle par laquelle arrivera le mélange de composés gazeux destiné à la formation du revêtement vitreux interne.

L'axe de ce cône 8 est confondu avec celui du barreau 2.

Ce cône de sortie 8 a pour fonction de faciliter l'écoulement des gaz en aval du dépôt que l'on forme alors dans le barreau creux et, surtout, on peut réaliser, en cette extrémité du barreau creux 2 où se trouve le cône 8, un apport thermique de manière simple - par exemple au moyen d'un chalumeau - afin d'éviter l'effet de pointe thermique froide et la création d'un sur-dépôt de suie qui serait nuisible au bon déroulement de l'opération complète de dépôt.

A titre purement indicatif et nullement limitatif, le demi-angle au sommet du cône 8 vaut 30°.

Comme le montre la figure 1, il est également possible de souder en l'autre extrémité du barreau creux 2 (et donc en amont du dépôt), un barreau creux auxiliaire 10 à paroi épaisse, fait d'une silice de qualité ordinaire et ayant le même axe X que le barreau creux 2 et sensiblement le même diamètre interne que ce dernier (afin d'obtenir un bon écoulement des gaz servant à la formation du revêtement vitreux interne).

Il est également possible de souder au barreau creux 2, à l'extrémité de ce dernier où se trouve le cône d'entrée 8, un tube 12 à paroi mince qui est fait d'une silice de qualité ordinaire, qui a le même axe que le barreau creux 2 et dont le diamètre interne est sensiblement égal au diamètre de la grande base du cône de sortie 8.

L'ensemble constitué par le cône de sortie 8 et le tube 12 forme ainsi, en aval du dépôt, une chambre dont le diamètre interne est supérieur au diamètre interne du barreau creux 2, ce qui facilite le dépôt et l'évacuation des suies résiduelles.

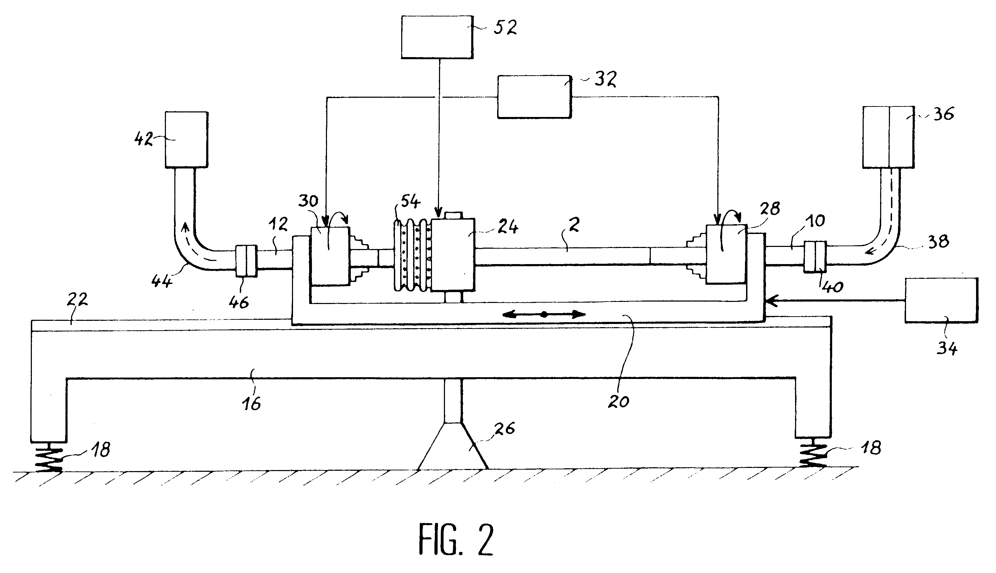

De préférence, le diamètre externe du tube 12 est sensiblement égal au diamètre externe du barreau creux 2 et le diamètre externe du barreau creux auxiliaire 10 est également sensiblement égal au diamètre externe de ce barreau creux 2, afin de pouvoir utiliser des mandrins identiques dans le dispositif qui sera décrit ultérieurement en faisant référence à la figure 2.

Le barreau auxiliaire 10 et le tube 12 ont ainsi des fonctions qui contribuent à rendre très économique la fabrication d'une préforme pour fibres optiques à partir du barreau creux 2.

Les opérations de soudure du barreau auxiliaire 10 et du tube 12 sont très simples et peu coûteuses.

De plus, en se reportant à la figure 2, on voit que le barreau auxiliaire 10 et le tube 12 permettent le maintien de l'ensemble 14 constitué par ce barreau 10, ce tube 12 et le barreau 2 dans les mandrins du dispositif représenté sur cette figure 2 (les longueurs respectives du barreau 10 et du tube 12 étant suffisantes pour ce faire), tout en garantissant
- une rotation régulière pendant l'opération de dépôt,
- un bon écoulement servant à la formation du dépôt, en amont de ce dépôt, grâce à la continuité de diamètre interne, et
- le dépôt et l'évacuation des suies résiduelles dans une chambre de plus grand diamètre, en aval du dépôt.

De plus, grâce au barreau auxiliaire 10 et au tube 12, il est possible
- d'éviter un sur-dépôt à l'extrémité du barreau creux 2 en laquelle se trouve le cône de sortie 8,
- de recevoir dans le barreau auxiliaire 10 la partie du début de dépôt dont l'inhomogénéité est bien connue pour ce type de dépôt et qui est appelée "taper" dans les publications en langue anglaise.

En effet, le barreau auxiliaire étant fait d'une silice de qualité ordinaire et ayant donc un coût très faible, il est intéressant que ce barreau auxiliaire 10 puisse recevoir cette partie inhomogène dont la longueur n'est généralement pas négligeable (et vaut 200 mm par exemple) et qui est inutilisable pour la production des fibres optiques.

Cette partie inhomogène subit ultérieurement un rétreint avec l'ensemble de la partie "noble" du dépôt et peut constituer, de façon avantageuse du point de vue économique, une partie d'amorçage pour l'opération de fibrage du fait qu'elle comporte une partie non négligeable de matière, compte tenu des dimensions de la préforme.

On voit ainsi que l'utilisation du barreau auxiliaire 10 et du tube 12 présente de multiples avantages pour un bon déroulement de l'opération de dépôt de revêtement vitreux interne et pour le rendement réel de fabrication et, par conséquent, pour le coût final des fibres optiques obtenues à partir de la préforme.

Sur la figure 2, on a représenté un mode de réalisation particulier du dispositif objet de l'invention.

Le dispositif schématiquement représenté sur la figure 2 permet la fabrication d'une préforme pour fibres optiques à partir du seul barreau creux 2 à paroi épaisse ou, de manière avantageuse, à partir de l'ensemble 14 comportant ce barreau creux 2, le barreau auxiliaire 10 et le tube 12, qui a été décrit plus haut.

Dans le cas où l'on utilise cet ensemble 14, les deux mandrins que comporte le dispositif représenté sur la figure 2 maintiennent respectivement le barreau auxiliaire 10 et le tube 12.

Bien entendu, dans le cas d'un traitement du seul barreau creux 2, ces mandrins maintiendraient respectivement les extrémités de ce barreau creux 2.

Le dispositif schématiquement représenté sur la figure 2 comprend :
- un support rigide fixe 16 dont les extrémités sont montées sur des moyens d'amortissement 18,
- un autre support rigide 20 qui est déplaçable en translation sur une glissière 22 que comporte le support 16,
- un four 24 qui est monté sur un support fixe 26 et qui est apte à porter la silice à sa température de fusion, et
- deux mandrins 28 et 30 coaxiaux qui sont montés sur le support déplaçable 20 et qui sont situés de part et d'autre du four 24.

Dans l'exemple représenté sur la figure 2, ces deux mandrins 28 et 30 sont prévus pour maintenir respectivement le barreau auxiliaire 10 et le tube 12 de l'ensemble 14 de la figure 1 dont l'axe X coincide avec l'axe commun des mandrins 28 et 30 lorsque cet ensemble 14 est maintenu par ces mandrins 28 et 30.

De plus ces mandrins 28 et 30 sont mobiles en rotation autour de leur axe commun de manière à pouvoir faire tourner l'ensemble 14 autour de son axe X.

Le dispositif de la figure 2 comprend également des moyens 32 prévus pour animer les mandrins 28 et 30 d'un mouvement de rotation continue et synchrone autour de l'axe commun des mandrins 28 et 30, avec une faible vitesse de rotation, de l'ordre d'une dizaine de tours par minute par exemple.

L'axe commun des mandrins 28 et 30 est parallèle à l'axe suivant lequel s'effectue la translation du support 20.

Le dispositif de la figure 2 comprend aussi des moyens 34 prévus pour commander la translation alternée du support 20 à une vitesse précise et sur une longueur déterminée, qui dépend de la longueur du barreau creux 2, afin de pouvoir déposer successivement les couches du revêtement vitreux interne de ce barreau 2.

Les moyens de commande 34 comprennent un motoréducteur (non représenté) qui entraîne une vis à bille de précision (non représentée) permettant la translation alternée du support 20 et donc du barreau 2 à travers le four 14 convenablement disposé à cet effet.

De plus, le dispositif de la figure 2 est muni de butées automatiques (non représentées) permettant de détecter les positions extrêmes du support lors de sa translation alternée.

Le dispositif schématiquement représenté sur la figure 2 comprend également des moyens 36 qui sont connus pour la mise en oeuvre du procédé MCVD et qui sont prévus pour injecter dans l'extrémité du barreau auxiliaire 10 qui est la plus éloignée du barreau 2, un mélange gazeux approprié, par exemple composé d'oxygène et de vapeur de tétrachlorure de silicium, en vue d'obtenir dans le barreau creux 2, un revêtement de silice pur, ou, si l'on souhaite un revêtement de silice dopée au fluor, le mélange précédent additionné d'un dopant sous forme de fluor ou d'un dérivé de ce dernier.

Un dopage au germanium nécessite l'addition, au mélange en question, de traces de GeCl₄.

Le mélange souhaité est injecté dans le barreau auxiliaire 10 par l'intermédiaire d'un tube 38 qui est relié au barreau auxiliaire 10 par un raccord tournant étanche 40.

Le dispositif de la figure 2 comprend en outre des moyens de pompage 42 qui sont également connus pour la mise en oeuvre du procédé MCVD et qui sont prévus pour l'évacuation de suies et de gaz (ces gaz résultant de la réaction des composants du mélange gazeux utilisé) à l'extrémité du tube 12 qui est la plus éloignée du barreau 2.

Cette évacuation se fait par l'intermédiaire d'un tube 44 qui est raccordé au tube 12 par l'intermédiaire d'un raccord tournant étanche 46.

Le four 24 est par exemple un four à induction comportant un suscepteur 48 et un ensemble de spires d'induction 50 qui sont coaxiaux, les spires d'induction entourant le suscepteur.

Le four 24 est par exemple du genre des fours à induction à suscepteur en graphite qui sont utilisés pour le fibrage de préformes.

Au lieu d'utiliser un four à suscepteur en graphite, on pourrait utiliser un four à suscepteur en zircone.

La longueur du four est par exemple égale à 350 mm dont 230 mm pour la longueur du suscepteur.

La connaissance de la valeur nominale du diamètre extérieur du barreau creux 2 et la grande précision sur cette valeur permettent un centrage très précis de ce barreau creux 2 à l'intérieur du four 24 et, plus précisément, à l'intérieur du suscepteur 48 de ce four, suscepteur qui est lui-même usiné avec une bonne précision.

En vue de ce centrage, le four 24 est muni de moyens non représentés, permettant le réglage de sa position.

Le four 24 est également muni de moyens 52 de commande de la température de ce four.

On explique ci-après la fabrication d'une préforme pour fibres optiques à partir de l'ensemble 14 (figure 1).

On commence par nettoyer l'ensemble 14, par exemple de la façon suivante : nettoyage à l'eau régale et trois rinçages à l'eau désionisée.

Bien entendu, dans le cas de l'utilisation du barreau 2 seul, on commencerait aussi par nettoyer ce barreau 2 par exemple de la manière indiquée ci-dessus.

Lorsque l'ensemble 14 est nettoyé, on le met en place dans le dispositif représenté sur la figure 2.

Alors, le barreau creux 2 traverse le suscepteur 48 du four 24, dans lequel il est centré de manière très précise, les mandrins 28 et 30 maintiennent respectivement le barreau auxiliaire 10 et le tube 12 et les tubes 38 et 44 sont respectivement raccordés au barreau auxiliaire 10 et au tube 12.

On procède ensuite successivement au glaçage thermique des surfaces interne et externe du barreau creux 2, puis éventuellement à une attaque chimique de la paroi interne du barreau 2, puis au dépôt des différentes couches du revêtement vitreux 47 (voir la figure 3) et enfin au rétreint simultané du barreau creux 2 et de la partie du barreau creux auxiliaire 10 qui est comprise entre le barreau creux 2 et le mandrin correspondant 28.

Pour réaliser toutes ces opérations, la température du four est maintenue à une valeur constante et la vitesse de translation de l'ensemble 14 est commandée de manière que le barreau 2 et la partie du barreau auxiliaire 10 dont il est question ci-dessus soit portés à des températures appropriées à ces opérations.

A cet effet, les moyens de commande 34 sont associés à un programmateur non représenté qui permet en particulier de faire varier convenablement la vitesse de passage du barreau creux 2 et de la partie du barreau auxiliaire 10 dans laquelle on forme le début du dépôt de revêtement vitreux, à travers le four 24, afin d'obtenir un dépôt interne de revêtement vitreux le plus régulier possible.

La précision du centrage du barreau creux 2 dans le suscepteur 48 du four 24, en liaison avec la grande régularité de l'épaisseur de la paroi de ce barreau creux 2, est essentielle et permet d'obtenir un chauffage très uniforme, bien caractérisé et bien reproductible de la silice du barreau creux 2.

Avec le dispositif représenté sur la figure 2, il est donc possible, par simple modulation de la vitesse de déplacement du support rigide 20, d'obtenir un échelonnement très large de la température de la silice à l'intérieur et à l'extérieur du barreau creux 2, échelonnement qui va permettre de réaliser les diverses opérations mentionnées plus haut, à savoir :
- le glaçage thermique des faces interne et externe du barreau creux 2,
- l'éventuelle attaque chimique avant dépôt du revêtement vitreux, cette attaque chimique étant par exemple réalisée par un mélange fréon (CCF₂Cl₂) et oxygène,
- le dépôt des différentes couches de revêtement vitreux, et
- le rétreint du barreau creux 2 et de la partie du barreau auxiliaire 10 qui est comprise entre le barreau 2 et le mandrin corresondant 28.

La préforme obtenue est très homogène.

De même, pendant le dépôt du revêtement vitreux 47, la modulation de la vitesse de déplacement du support 20 permet de réduire à son strict minimum la partie inhomogène du dépôt et de confiner cette partie inhomogène dans le barreau auxiliaire 10 pour augmenter le rendement réel de fabrication de la préforme.

En outre, la vitesse de translation du support 20 est commandée, entre les dépôts de couches de revêtement vitreux, de manière à minimiser le temps d'opération total.

A titre purement indicatif et nullement limitatif, on peut utiliser les conditions suivantes pour la fabrication de la préforme :
- la température du four à induction 24 est maintenue à 2000C° ± 2°C,
- pendant la phase de dépôt du revêtement vitreux, la vitesse de translation du support 20 est modulée autour de 30 à 40 mm/mn : au début de l'opération de dépôt, pendant qu'une partie du barreau auxiliaire 10 se trouve dans le four 24, la vitesse monte progressivement de 10 mm/mn jusqu'à une valeur appartenant au domaine allant de 30 à 40 mm/mn pour une longueur de déplacement d'environ 100 mm, afin de réduire la longueur de la zone inhomogène de dépôt, et ensuite cette vitesse est stabilisée à cette valeur,
- après le dépôt de chaque couche de revêtement vitreux, le retour rapide du support déplaçable 20 se fait à une vitesse de l'ordre de 300 mm/mn ou plus,
- le glaçage thermique se fait avec une vitesse de translation de l'ordre de 22 mm/mn,
- dans le cas où l'on effectue une attaque chimique de la face interne du barreau creux 2, cette attaque chimique se fait en même temps que la passe de glaçage thermique,
- l'opération de rétreint se fait avec une vitesse de translation de l'ordre de 15 mm/mn, et
- cette opération de rétreint est effectuée en trois ou quatre passes successives, éventuellement en établissant, mais ce n'est pas obligatoire, une légère dépression dans l'ensemble 14.

Dans ces conditions, avec un barreau creux usiné 2 dont le diamètre extérieur vaut 70 mm et le diamètre interne 30 mm avant le dépôt du revêtement vitreux, on aboutit à une efficacité de l'ordre de 20 à 25 g/mn, c'est-à-dire à une productivité de l'ordre de 50 à 60 km/heure de fibres équivalentes rétreintes, ce qui est tout à fait spectaculaire par rapport à des procédés classiques utilisant des tubes à paroi mince et un chalumeau, dont l'efficacité varie entre 1 et 5 g/mn.

La grande efficacité de l'opération de rétreint est permise grâce à l'utilisation conjointe d'un barreau usiné de grande précision et d'un four qui est par exemple un four à induction à suscepteur en graphite ou en zircone.

En effet, sans l'homogénéité de l'épaisseur à rétreindre, homogénéité qui résulte d'une part de l'emploi du barreau creux usiné et d'autre part de la régularité du dépôt de revêtement vitreux, et sans l'effet d'une température suffisante et homogène procurée par le four, cette opération de rétreint conduirait à des résultats médiocres en termes d'efficacité ou en termes de régularité géométrique pour la préforme obtenue et donc pour les fibres optiques produites, voire serait impossible.

La création d'un léger vide dans l'ensemble 14 permet d'accélérer l'opération de rétreint et permet alors la fermeture du barreau creux par exemple en deux passages.

Le glaçage thermique des faces interne et externe du barreau creux usiné 2 peut se faire en un passage, évite un usinage plus précis de type polissage, qui est long et coûteux, et rend la face interne du barreau 2 parfaitement lisse et homogène.

Le nettoyage par attaque chimique de la face interne de ce barreau creux 2 peut se faire en un passage.

Au lieu de maintenir constante la température du four pendant toutes les opérations et de faire varier de manière appropriée la vitesse de translation du support 20 pour réaliser ces opérations, on peut, au contraire, maintenir constante la vitesse de translation du support 20 et faire varier de manière appropriée la température du four 24.

Un autre avantage de l'utilisation du four pour l'ensemble des opérations est de pouvoir assez simplement ajuster la largeur de la zone chauffée en fonction de la configuration du suscepteur 48 et des spires d'induction 50, ce qui permet d'optimiser le rendement de dépôt dans un barreau creux usiné de dimensions données.

Pour accroître ce rendement de dépôt qui, in fine, s'exprime en g/mn de silice de grande qualité déposée en couches successives, on peut munir le four 24 de moyens de refroidissement 54.

Ces moyens de refroidissement 54 ont pour fonction de refroidir le plus efficacement possible le barreau creux usiné en aval de l'écoulement des gaz permettant l'obtention du revêtement vitreux.

Ceci permet, par un phénomène d'amélioration de la thermo-phorèse, d'accroître encore le rendement de dépôt.

Sans l'emploi de ces moyens de refroidissement, l'ensemble du barreau creux 2 ou du moins une zone assez longue de ce dernier serait progressivement portée à une température assez élevée.

L'utilisation du four 24 est donc sensiblement plus efficace si l'on fixe contre ce four les moyens de refroidissement 54 qui font alors pour ainsi dire partie intégrante de ce four.

Un exemple de réalisation de ces moyens de refroidissement 54 est schématiquement représenté sur la figure 3.

Dans cet exemple, ces moyens de refroidissement 54 comprennent un corps tubulaire 56 métallique dont la paroi externe porte des ailettes de refroidissement métalliques 58 et dont la paroi interne forme un corps noir qui facilite l'absorption de chaleur dégagée par le barreau creux porté à haute température.

Le corps 56 est traversé par des canaux 60 qui sont répartis régulièrement tout autour de ce corps 56 et qui sont prévus pour envoyer, vers le barreau creux 2, des jets d'un gaz tel que l'azote, qui est issu de moyens non représentés et qui refroidit le barreau 2.

De préférence, ces canaux 60 sont inclinés vers la partie du barreau 2 qui correspond à l'aval du flux des gaz résultant de la réaction qui conduit au revêtement vitreux, de manière à évacuer rationnellement le gaz de refroidissement vers cette partie du barreau creux 2.

Ainsi, en optimisant la largeur de zone chauffée par la conception du suscepteur du four, on apporte une énergie calorifique suffisante pour atteindre la température choisie pour le barreau creux 2 et les moyens de refroidissement 54 juxtaposés au four 24 limitent l'extension de cette zone chauffée sans autre interaction ou perturbation du fonctionnement du four 24.

La présente invention fournit donc un procédé de fabrication de préformes pour fibres optiques utilisant une réaction connue de dépôt en phase vapeur au moyen d'un four auquel on intègre avantageusement des moyens de refroidissement.

Ce procédé permet de produire des préformes de très grand diamètre grâce à un dépôt de revêtement vitreux dans des barreaux creux usinés de très grande précision et à paroi épaisse. Ces préformes et donc les fibres optiques qui en résultent ont une très grande précision géométrique et un coût très faible qui résulte de la conjonction de l'utilisation de barreaux usinés de manière peu coûteuse et d'opérations efficaces, réalisées dans un seul dispositif, à savoir un glaçage thermique de surface, un dépôt de revêtement vitreux et un rétreint très efficace.

Le procédé objet de l'invention est ainsi particulièrement adapté à la production de fibres optiques monomodes de bonne qualité et peu coûteuses en faisant un bon compromis entre la quantité minimale de silice à déposer sur la face interne du barreau creux et le rapport qualité-prix de ce barreau creux usiné.

Bien entendu, le procédé objet de la présente invention est également bien adapté à la fabrication de fibres optiques multimodes de grande qualité et de très faible coût en choisissant des barreaux creux usinés de diamètre interne approprié.

## Revendications

1. Procédé de fabrication d'une préforme pour fibres optiques, caractérisé en ce qu'il comprend les étapes successives suivantes :
- on fabrique un barreau creux de silice (2) à paroi épaisse et de grande précision géométrique, l'épaisseur de la paroi valant au moins 15 mm, le barreau creue possèdant
- un diamètre intérieur nominal connu et précis avec une tolérance inférieure à 0,01 mm,
- un diamètre extérieur nominal connu et précis avec une tolérance inférieure à 0,01 mm, et
- une concentricité de 0,01 ou moins entre la paroi interne et la paroi externe du barreau creux,
- on nettoie ce barreau (2) et
- on utilise un four (24), qui est traversé par le barreau et apte à porter la silice à sa température de fusion et par rapport auquel le barreau (2) subit des déplacements relatifs, pour réaliser les opérations successives suivantes :
- un glaçage thermique interne et externe du barreau (2),
- un dépôt interne en phase vapeur d'un revêtement vitreux (47) dans ce barreau (2), à l'aide d'un mélange de composés gazeux que l'on fait circule, dans le barreau, ces composés étant aptes à engendrer le revêtement par réaction entre eux, ce revêtement vitreux étant destiné à la formation ultérieure du coeur des fibres optiques, et
- un rétreint du barreau (2),
les différentes températures du barreau, qui sont nécessaires à la réalisation de ces opérations, étant obtenues en faisant varier la température du four (24) ou la vitesse relative du barreau par rapport à ce four.

2. Procédé selon la revendication 1, caractérisé en ce qu'il comprend en outre une attaque chimique de la surface interne du barreau (2) après ou pendant le glaçage thermique, avant le dépôt interne.

3. Procédé selon l'une quelconque des revendications 1 et 2, caractérisé en ce que le barreau (2) est refroidi en aval de la circulation du mélange de composés gazeux.

4. Procédé selon l'une quelconque des revendications 1 à 3, caractérisé en ce que la fabrication du barreau (2) est complétée par l'usinage d'un cône (8) à une extrémité de ce barreau et suivant l'axe (X) de celui-ci et en ce que le mélange de composés gazeux pénètre dans ce barreau (2) par l'autre extrémité de celui-ci.

5. Procédé selon la revendication 4, caractérisé en ce qu'on raccorde en outre au barreau (2), coaxialement à celui-ci et du côté du cône (8) usiné, un tube (12) de silice à paroi mince dont le diamètre intérieur est égal au diamètre de la grande base du cône (8).

6. Procédé selon l'une quelconque des revendications 1 à 5, caractérisé en ce que la fabrication du barreau (2) est complétée par le raccordement, coaxialement à ce barreau et à une extrémité de celui-ci, d'une extrémité d'un barreau creux auxiliaire de silice (10) à paroi épaisse, qui a sensiblement le même diamètre intérieur que le barreau fabriqué (2), et en ce que le mélange de composés gazeux pénètre dans ce barreau auxiliaire (10) par l'autre extrémité de celui-ci.

7. Procédé selon la revendication 1, caractérisé en ce que le four est un four à induction (24).

8. Procédé selon la revendication 7, caractérisé en ce que ce four à induction (24) comprend un suscepteur (48) en graphite ou en zircone.

9. Dispositif de fabrication d'une préforme pour fibres optiques, comprenant :
- un four (24),
- un support (20),
- des moyens (34) de déplacement relatif alternatif du support (20) par rapport au four (24) et de commande de la vitesse de ce déplacement relatif,
- des moyens (28, 30) de maintien d'un barreau creux de silice (2) à paroi épaisse et de grande précision géométrique, ces moyens de maintien (28, 30) étant montés sur le support (20), de part et d'autre du four (24), pour permettre au barreau de traverser ce four,
- des moyens (32) de rotation synchrone des moyens de maintien (28, 30), prévus pour faire tourner le barreau autour de l'axe (X) de ce barreau (2),
- des moyens (52) de commande de la température du four (24), ce four étant apte à porter la silice à sa température de fusion, et
- des moyens (36, 42) de circulation, dans le barreau (2), d'un mélange de composés gazeux aptes à engendrer, par réaction entre eux, un revêtement vitreux (47) sur la paroi interne du barreau, ce revêtement vitreux étant destiné à la formation ultérieure du coeur des fibres optiques, de sorte qu'on peut réaliser successivement, à l'aide du four (24) et après nettoyage du barreau (2), un glaçage thermique interne et externe de ce barreau, un dépôt en phase vapeur du revêtement vitreux dans ce barreau et un rétreint de ce barreau, caractérisé en ce qu'il comprend en outre des moyens (54) de refroidissement du barreau (2) en aval de la circulation du mélange de composés gazeux et en ce que les
moyens de refroidissement (54) comprennent :
- un corps tubulaire (56), qui est muni d'ailettes de refroidissement (58) et qui est prévu pour être traversé par le barreau (2), et
- des canaux (60) d'amenée d'un gaz de refroidissement qui sont formés dans le corps tubulaire (56), de façon à amener ce gaz vers l'intérieur du corps tubulaire.

10. Dispositif selon la revendication 9, caractérisé en ce que ces moyens de refroidissement (54) sont fixés contre le four (24).

11. Dispositif selon la revendication 9, caractérisé en ce que les canaux (60) d'amenée du gaz de refroidissement sont inclinés vers l'aval de la circulation du mélange de composés gazeux.

## Claims

1. Method for producing a preform for optical fibres, characterized in that it includes the following successive stages:
- a high geometrical precision thick-walled hollow silica bar (2) is produced, the thickness of the wall being at least 15 mm, the hollow bar having a nominal, known, precise, internal diameter with a tolerance below 0.01 mm, a nominal, known, precise, external diameter with a tolerance below 0.01 mm and a concentricity of 0.01 or less between the inner wall and the outer wall of the hollow bar,
- this bar (2) is cleaned, and
- an oven (24) is used able to heat the silica to its melting temperature and with respect to which the bar (2) undergoes relative movements so as to carry out the following successive operations:
- an internal and external thermic glazing of the bar (2),
- an internal vapour phase deposition of a vitreous coating (47) in this bar (2) with the aid of a mixture of gaseous constituents to make it circulate inside the bar, these constituents being able to generate the coating via their interaction, this vitreous coating being intended for the subsequent formation of the core of the optical fibres, and
- an area contraction of the bar (2),
the various temperatures of the bar required for the carrying out of these operations being obtained by varying the temperature of the oven (24) or the relative speed of the bar with respect to this oven.

2. Method according to claim 1, characterized in that it further includes a chemical attack of the internal surface of the bar (2) after or during thermic glazing prior to the internal deposition.

3. Method according to either of the claims 1 and 2, characterized in that the bar (2) is cooled downstream of the circulation of the mixture of gaseous constituents.

4. Method according to any one of the claims 1 to 3, characterized in that the production of the bar (2) is completed by the machining of a cone (8) at one extremity of this bar and along the axis (X) of the latter and in that the mixture of gaseous constituents penetrates into this bar (2) via the other extremity of the latter.

5. Method according to claim 4, characterized in that coaxial to the bar (2) and on the side of the machined cone (8), a thin-walled silica tube (12) is connected to the bar, the internal diameter of this tube being equal to the diameter of the large base of the cone (8).

6. Method according to any one of the claims 1 to 5, characterized in that the production of the bar (2) is completed by the connection, coaxial to this bar and one extremity of the bar of one extremity, of an auxiliary thick-walled hollow silica bar (10) having roughly the same internal diameter as the produced bar (2), and in that the mixture of gaseous constituents penetrates into this auxiliary bar (10) via the other extremity of the latter.

7. Method according to claim 1, characterized in that the oven is an induction oven (24).

8. Method according to claim 7, characterized in that the induction oven (24) has a graphite or zirconia susceptor (48).

9. Device for producing a preform for optical fibres, comprising:
- an oven (24),
- a support (20),
- means (34) for the relative alternate movement of the support (20) with respect to the oven (24) and for controlling the speed of this relative movement,
- means (28, 30) for maintaining a thick-walled high geometrical precision hollow silica bar (2), these holding means (28, 30) being mounted on the support (20) on both sides of the oven (24) so as to enable the bar to traverse this oven,
- means (32) for the synchronous rotation of the holding means (28, 30) and provided to make the bar rotate around the axis (X) of this bar (2),
- means (52) for controlling the temperature of the oven (24), this oven being able to heat the silica to its melting temperature,
- means (36, 42) for circulating inside the bar (2) a mixture of gaseous constituents able via interaction to generate a vitreous coating (47) on the internal wall of the bar, this vitreous coating being intended to subsequently form the core of the optical fibres so that, with the aid of the oven (24) and after cleaning of the bar (2), it is possible to successively carry out an internal and external thermic glazing of this bar, a vapour phase deposition of the vitreous coating in this bar and an area contraction of this bar,
the cooling means (54) comprising:
- a tubular body (56) provided with cooling blades (58) and which is traversed by the bar (2) and
- cooling gas supply channels (60) formed in the tubular body (56), so as to bring the said gas into the interior of the tubular body.

10. Device according to claim 9, characterized in that these cooling means (54) are fixed against the oven (24).

11. Device according to claim 9, characterized in that the cooling gas feed channels (60) are slanted downstream of the circulation of the mixture of gaseous constituents.

## Patentansprüche

1. Verfahren zum Herstellen einer Vorform für optische Fasern, **dadurch gekennzeichnet**, daß es die folgenden, aufeinanderfolgenden Schritte umfaßt:
man stellt eine hohle Stange aus Silicium (2) mit einer dicken Wand und großer geometrischer Genauigkeit her, wobei die Wanddicke mindestens 15 mm beträgt und die hohle Stange einen Innendurchmesser, der nominal bekannt und mit einer Toleranz unter 0,01 mm genau ist, einen Außendurchmesser, der nominal bekannt und mit einer Toleranz unter 0,01 mm genau ist, und eine Konzentrizität von 0,01 oder weniger zwischen der Innenwandung und der Außenwandung der hohlen Stange aufweist,
- man reinigt diese Stange (2) und
- man verwendet einen Ofen (24), der von der Stange durchquert wird und das Silicium auf seine Schmelztemperatur bringen kann und in bezug auf den die Stange (2) relativen Verschiebungen ausgesetzt ist, um die aufeinanderfolgenden, folgenden Vorgänge auszuführen:
- eine innere und äußere, thermische Glättung der Stange (2),
- eine innere Dampfphasenabscheidung eines glasartigen Überzugs (47) in dieser Stange (2) mit Hilfe einer Mischung aus gasförmigen Bestandteilen, die man durch die Stange fließen läßt, wobei diese Bestandteile den Überzug durch Reaktion unter ihnen erzeugen kann, wobei der glasartige Überzug zu der späteren Bildung des Kernes der optischen Fasern bestimmt ist, und
- eine Einschnürung der Stange (2),
wobei die verschiedenen Temperaturen der Stange, die zur Durchführung dieser Vorgänge notwendig sind, erhalten werden, indem man die Temperatur des Ofens (24) oder die relative Geschwindigkeit der Stange in bezug auf diesen Ofen ändert.

2. Verfahren gemäß Anspruch 1, **dadurch gekennzeichnet**, daß es ferner einen chemischen Angriff auf die innere Oberfläche der Stange (2) nach oder während der thermischen Glättung vor der inneren Abscheidung umfaßt.

3. Verfahren gemäß irgendeinem der Ansprüche 1 und 2, **dadurch gekennzeichnet**, daß die Stange (2) stromabwärts der Strömung der Mischung aus gasförmigen Bestandteilen abgekühlt wird.

4. Verfahren gemäß irgendeinem der Ansprüche 1 bis 3, **dadurch gekennzeichnet**, daß die Herstellung der Stange (2) durch die Fertigung eines Konus (8) an einem Ende dieser Stange und entlang seiner Achse (X) vervollständigt wird, und daß die Mischung der gasförmigen Bestandteile in diese Stange (2) durch ihr anderes Ende eintritt.

5. Verfahren gemäß Anspruch 4, **dadurch gekennzeichnet**, daß man ferner an die Stange (2) koaxial mit ihr und auf der Seite des gefertigten Konus (8) ein Rohr (12) aus Silicium mit einer dünnen Wandung anschließt, dessen Innendurchmesser gleich dem Durchmesser der großen Basis des Konus (8) ist.

6. Verfahren gemäß irgendeinem der Ansprüche 1 bis 5, **dadurch gekennzeichnet**, daß die Herstellung der Stange (2) durch die Verbindung, koaxial zu dieser Stange und an einem Ende von ihr, eines Endes einer zusätzlichen, hohlen Stange aus Silicium (10) mit einer dicken Wand abgeschlossen wird, die im wesentlichen den gleichen Innendurchmesser wie die hergestellte Stange (2) hat, und daß die Mischung der gasförmigen Bestandteile in diese zusätzliche Stange (10) durch das andere Ende von ihr eintritt.

7. Verfahren gemäß Anspruch 1, **dadurch gekennzeichnet**, daß der Ofen ein Induktionsofen (24) ist.

8. Verfahren gemäß Anspruch 7, **dadurch gekennzeichnet**, daß der Induktionsofen (24) einen Nebenschluß (48) aus Graphit oder aus Zirkonium umfaßt.

9. Vorrichtung zum Herstellen einer Vorform für optische Fasern, umfassend:
- einen Ofen (24),
- eine Halterung (20),
- eine Einrichtung (34) zur relativen, alternativen Verschiebung der Halterung (20) in bezug auf den Ofen (24) und zum Steuern der Geschwindigkeit dieser relativen Verschiebung,
- Einrichtungen (28, 30) zum Halten einer hohlen Stange aus Silicium (2) mit dicker Wand und großer, geometrischer Genauigkeit, wobei diese Halteeinrichtungen (28, 30) an der Halterung (20) beidseitig des Ofens (24) angebracht sind, damit die Stange diesen Ofen durchqueren kann,
- Einrichtungen (32) zum synchronen Drehen der Halteeinrichtungen (28, 30), die vorgesehen sind, um die Stange um die Achse (X) dieser Stange (2) drehen zu lassen,
- Steuerungseinrichtungen (52) für die Temperatur des Ofens (24), wobei dieser Ofen das Silicium auf seine Schmelztemperatur bringen kann, und
- Einrichtungen (36, 42) für die Strömung einer Mischung aus gasförmigen Bestandteilen in dieser Stange (2), die durch eine Reaktion unter ihnen einen gläsernen Überzug (47) auf der Innenwandung der Stange erzeugen kann, der glasartigen Überzug zu der späteren Bildung des Kerns der optischen Fasern derart bestimmt ist, daß man aufeinanderfolgend mit Hilfe des Ofens (24) und nach Reinigung der Stange (2) durchführen kann eine innere und äußere, thermische Glättung dieser Stange eine Dampfphasenabscheidung des gläsernen Überzugs in dieser Stange und eine Einschnürung dieser Stange, **dadurch gekennzeichnet**, daß sie ferner Einrichtungen (54) zum Kühlen der Stange (2) stromabwärts der Strömung der Mischung aus gasförmigen Bestandteilen umfaßt.
die Kühleinrichtungen (54) umfassen:
- einen rohrförmigen Körper (56), der mit Kühllamellen (58) ausgerüstet ist und der vorgesehen ist, von der Stange (2) durchquert zu werden, und
- Kanäle (60) zum Zuführen eines Kühlgases, die in dem rohrförmigen Körper (56) derart gebildet sind, daß sie dieses Gas zu dem Inneren des rohrförmigen Körpers bringen.

10. Vorrichtung gemäß Anspruch 9, **dadurch gekennzeichnet**, daß diese Kühleinrichtungen (54) an dem Ofen (24) befestigt sind.

11. Vorrichtung gemäß Anspruch 9, **dadurch gekennzeichnet**, daß die Zuführkanäle (60) für das Kühlgas stromabwärts der Strömung der Bestandteile der gasförmigen Mischung geneigt sind.
